# EUROPÄISCHE PATENTSCHRIFT

(11) **EP 3 207 251 B1**
(45) Veröffentlichungstag und Bekanntmachung des Hinweises auf die Patenterteilung: **20.08.2025**
(21) Anmeldenummer: 15775751.9
(22) Anmeldetag: 12.10.2015
(51) Int. Cl.: F04B 49/06, F04B 51/00, F04B 35/04, F04C 23/00, F04C 28/28, F04C 29/04, F04D 25/06, H02K 11/20, H02K 11/33, H02K 11/35, H02K 5/22

(54) **KÄLTEMITTELVERDICHTER**
REFRIGERANT COMPRESSOR
COMPRESSEUR DE RÉFRIGÉRANT

(30) Priorität: 13.10.2014 DE 102014114837
(43) Veröffentlichungstag der Anmeldung: 23.08.2017
(73) Patentinhaber: BITZER Kühlmaschinenbau GmbH, 71065 Sindelfingen (DE)
(72) Erfinder: SCHMIDT, Henrik Thomsen, DK-6400 Sonderborg (DK); HILDEBRANDT, Dieter, 25482 Appen (DE); BEIER, Andre, 06246 Bad Lauchstädt (DE)
(74) Vertreter: Hoeger, Stellrecht & Partner Patentanwälte mbB
(86) Internationale Anmeldenummer: PCT/EP2015/073551
(87) Internationale Veröffentlichungsnummer: WO 2016/058984

(56) Entgegenhaltungen:
- EP-A2- 1 245 912
- EP-A2- 2 575 241
- EP-A2- 2 767 784
- WO-A1-03/036090
- KR-A- 20130 102 352
- US-A1- 2005 235 660
- US-A1- 2010 293 397
- US-A1- 2011 062 809
- US-A1- 2011 264 409
- US-B1- 6 198 183

## Beschreibung

Die Erfindung betrifft einen Kältemittelverdichter umfassend eine Verdichtereinheit mit einem Verdichtergehäuse und mindestens einem in dem Verdichtergehäuse angeordneten Verdichterelement zum Verdichten von Kältemittel, eine Antriebseinheit mit einem Antriebsgehäuse und einem in dem Antriebsgehäuse angeordneten Elektromotor und mit an dem Antriebsgehäuse angeordneten Anschlussklemmen für den Elektromotor und ferner umfassend eine elektronische Funktionseinheit.

Derartige Kältemittelverdichter sind aus der EP 1 245 912 A2 bekannt, wobei eine Verdichterfunktion der elektrischen Funktionseinheit eine Parametererfassungsfunktion ist, wobei eine weitere Verdichterfunktion eine Schutzfunktion ist, wobei zur Ausführung der Schutzfunktion die Parametererfassungsfunktion ausgeführt wird und die erfassten Funktionsparameter mit mindestens einem Referenzparameter verglichen werden, wobei bei Über- oder Unterschreiten des mindestens einen Referenzparameters eine Abschaltung des Kältemittelverdichters erfolgt, wobei eine weitere Verdichterfunktion eine Betriebszustandsüberwachungsfunktion ist, wobei zur Ausführung der Betriebszustandsüberwachungsfunktion eine Aufzeichnung der Ausführung der mindestens einen Parametererfassungsfunktion und der mindestens einen Schutzfunktion erfolgt, wobei die Aufzeichnung der Funktionsparameter und die Ausführung mindestens einer Schutzfunktion über der Zeit erfolgt und wobei die elektronische Funktionseinheit mit einer Kommunikationseinheit zum Austausch von Daten mit einer externen übergeordneten Anlagensteuerung kommuniziert.

Der Erfindung liegt daher die Aufgabe zugrunde, einen Kältemittelverdichter der gattungsgemäßen Art derart zu verbessern, dass ausreichend Information über den jeweiligen Betriebszustand des Verdichters vorliegen.

Diese Aufgabe wird durch einen Kältemittelverdichter gemäß Anspruch 1 gelöst.

Hinsichtlich der durch die elektronische Funktionseinheit auszuführenden Verdichterfunktion wurden im Zusammenhang mit den bislang erläuterten Ausführungsformen keine näheren Angaben gemacht.

Besonders vorteilhaft ist es, wenn die Verdichterfunktion eine Parametererfassungsfunktion ist und dass insbesondere zur Ausführung der Parametererfassungsfunktion mindestens einer der Funktionsparameter wie, Spannung am Elektromotor, Stromaufnahme des Elektromotors, Eintrittsdruck des Kältemittels, Eintrittstemperatur des Kältemittels, Austrittsdruck des Kältemittels, Austrittstemperatur des Kältemittels erfasst werden.

Besonders vorteilhaft ist diese Lösung auch dadurch, dass damit sehr kurze Wege zur Erfassung der Funktionsparameter des Elektromotors und auch der weiteren Funktionsparameter des Kältemittelverdichters vorliegen.

Insbesondere können durch Ausführung von einer oder mehreren Schutzfunktionen Beschädigungen des Verdichters vermieden werden.

Erfindungsgemäß ist vorzugsweise vorgesehen, dass die Verdichterfunktion eine Schutzfunktion ist, die den mindestens einen bei der Parametererfassungsfunktion erfassten Funktionsparameter mit mindestens einem Referenzparameter vergleicht und bei Über- oder Unterschreiten des mindestens einen Referenzparameters eine Abschaltung des Kältemittelverdichters herbeiführt, um eine Beschädigung desselben zu vermeiden.

Darüber hinaus sind alternativ oder ergänzend vorzugsweise weitere Verdichterfunktionen für den Betrieb des Kältemittelverdichters von Vorteil.

Vorteilhafterweise ist vorgesehen, dass die Verdichterfunktion eine Steuerungsfunktion ist und dass zur Ausführung der Steuerungsfunktion mindestens eine der Einheiten wie eine Schmiermittelheizung, ein Zusatzlüfter, ein Steuerelement für die Verdichterleistung, ein Einspritzelement für verdichtetes Kältemittel zur zusätzlichen Kühlung, insbesondere zur Einspritzung von flüssigem Kältemittel, vorzugsweise in einen Saugkanal und/oder hochdruckseitig im Bereich einer Ventilplatte oder eines Hochdruckraums, und/oder eine Motorsteuerung angesteuert wird.

Im Fall der Ansteuerung des Motors wird beispielsweise eine Motoranlaufsteuerung und/oder der Motor selbst hinsichtlich seiner Drehzahl, beispielsweise wenn die elektronische Funktionseinheit einen Frequenzumrichter umfasst, angesteuert.

Durch diese zusätzlichen Steuerungsfunktionen besteht die Möglichkeit, den Kältemittelverdichter optimal innerhalb der vorgesehenen Einsatzgrenzen zu betreiben.

Eine weitere vorteilhafte Lösung sieht vor, dass die Verdichterfunktion eine Betriebszustandsüberwachungsfunktion ist und dass insbesondere zur Ausführung der Betriebszustandsüberwachungsfunktion eine Aufzeichnung der Ausführung mindestens einer Parametererfassungsfunktion und/oder mindestens einer Schutzfunktion und/oder mindestens einer Steuerungsfunktion erfolgt.

Durch eine derartige Aufzeichnung derartiger Funktionen besteht die Möglichkeit, während des gesamten Betriebs des erfindungsgemäßen Kältemittelverdichters dessen Betriebszustände zu überwachen und auch kurzzeitige Überschreitungen der jeweiligen zulässigen Betriebszustände zu erkennen oder auch Überschreiten der jeweiligen Einsatzgrenzen in einem Einsatzdiagram zu erkennen.

Vorzugsweise ist dabei vorgesehen, dass die Aufzeichnung des mindestens einen Funktionsparameters und/oder der Ausführung mindestens einer Schutzfunktion und/oder die Ausführung der mindestens einen Steuerungsfunktion über der Zeit erfolgt.

Um mit dem erfindungsgemäßen Kältemittelverdichter auch mit weiteren externen Geräten kommunizieren zu können, ist vorzugsweise vorgesehen, dass die elektronische Funktionseinheit mit einer Kommunikationseinheit zum Austausch von Daten mit externen Geräten versehen ist.

Eine derartige Kommunikationseinheit kann entweder so ausgebildet sein, dass sie Daten leitungsgebunden oder drahtlos austauscht.

Darüber hinaus ist vorzugsweise vorgesehen, dass die elektronische Funktionseinheit mit mindestens einem Anzeigeelement versehen ist, welches mindestens einen Ausführungszustand einer Verdichterfunktion oder deren Resultat anzeigt.

So sieht eine alternativ oder ergänzend zu den bislang beschriebenen Ausführungsformen vorteilhafte Lösung vor, dass die Anschlussklemmen in einem an dem Antriebsgehäuse angeordneten Gehäuse vorgesehen sind und das in dem Gehäuse die elektronische Funktionseinheit vorgesehen ist, welche mindestens eine Verdichterfunktion ausführt.

Der Vorteil der erfindungsgemäßen Lösung ist somit darin zu sehen, dass dadurch eine kompakte Lösung erhalten wird, die darin besteht, dass in dem ohnehin für die Anschlussklemmen vorzusehenden Gehäuse die elektronische

Funktionseinheit integriert ist und somit bereits vom Hersteller des Kältemittelverdichters mit dem Kältemittelverdichter verbunden und fest installiert mitgeliefert werden kann.

Dabei kann die Ausbildung des Gehäuses in der unterschiedlichsten Art und Weise erfolgen.

So sieht eine vorteilhafte Lösung vor, dass das Gehäuse eine Anschlussgehäuseeinheit aufweist, in welcher die Anschlussklemmen angeordnet sind.

Ferner ist vorzugsweise vorgesehen, dass das Gehäuse eine Steuerungsgehäuseeinheit aufweist, in welcher die elektronische Funktionseinheit angeordnet ist.

Vorzugsweise ist dabei vorgesehen, dass die Anschlussgehäuseeinheit und die Steuerungsgehäuseeinheit einzelne Module des Gehäuses sind, aus welchem sich das Gehäuse zusammensetzen lässt.

Eine besonders günstige Lösung sieht vor, dass die Anschlussgehäuseeinheit an dem Antriebsgehäuse angeordnet ist und somit bereits mit dem Antriebsgehäuse fest montiert werden kann.

Weiterhin ist vorzugsweise vorgesehen, dass die Steuerungsgehäuseeinheit an der Anschlussgehäuseeinheit angeordnet ist.

Das heißt, dass die Anschlussgehäuseeinheit die Steuerungsgehäuseeinheit trägt.

Eine besonders günstige Lösung sieht vor, dass die Steuerungsgehäuseeinheit auf einer dem Antriebsgehäuse gegenüberliegenden Seite der Anschlussgehäuseeinheit an dieser angeordnet ist.

Somit besteht die Möglichkeit, zunächst die Anschlussgehäuseeinheit an dem Antriebsgehäuse zu montieren und dann zusätzlich die Steuerungsgehäuseeinheit nach Montage der Anschlussgehäuseeinheit an der Anschlussgehäuseeinheit zu montieren.

Insbesondere besteht damit die Möglichkeit, die Anschlussgehäuseeinheit und die Steuerungsgehäuseeinheit übereinander in der Art von Stapeln anzuordnen.

Eine besonders günstige Lösung sieht vor, dass die Steuerungsgehäuseeinheit die Anschlussgehäuseeinheit abdeckt, das heißt, dass in diesem Fall die Steuerungsgehäuseeinheit dazu dienen kann, die Anschlussgehäuseeinheit abzudecken und auf ihrer dem Antriebsgehäuse gegenüberliegenden Seite zu verschließen.

Besonders günstig ist es, wenn die Steuerungsgehäuseeinheit lösbar mit der Anschlussgehäuseeinheit verbunden ist.

Damit besteht die Möglichkeit, zuerst in der Anschlussgehäuseeinheit die notwendigen Anschlüsse insbesondere mit den Anschlussklemmen, zu realisieren und dann die Steuerungsgehäuseeinheit zu montieren und diese mit den entsprechenden Einheiten und/oder Sensoren zu verbinden.

Beispielsweise könnte die Steuerungsgehäuseeinheit so aufgebaut sein, dass sie selbst einen Deckel aufweist.

Um eine besonders einfache Montage und einfache Verdrahtung der elektronischen Funktionseinheit in der Steuerungsgehäuseeinheit realisieren zu können, ist vorzugsweise vorgesehen, dass die Steuerungsgehäuseeinheit auf einer der Anschlussgehäuseeinheit abgewandten Seite durch einen Gehäusedeckel abgedeckt ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine schematische Seitenansicht eines erfindungsgemäßen Kältemittelverdichters;
- Fig. 2: einen ausschnittsweisen Längsschnitt durch ein erfindungsgemäßes Gehäuse und eine dieses Gehäuse tragende Antriebseinheit;
- Fig. 3: eine perspektivische Explosionsdarstellung eines modular aufgebauten Gehäuses, umfassend eine Anschlussgehäuseeinheit und eine Steuerungsgehäuseeinheit sowie einen Deckel und
- Fig. 4: eine Draufsicht auf die erfindungsgemäße Steuerungsgehäuseeinheit bei abgenommenen Deckel in Richtung des Pfeils A in Fig. 3.

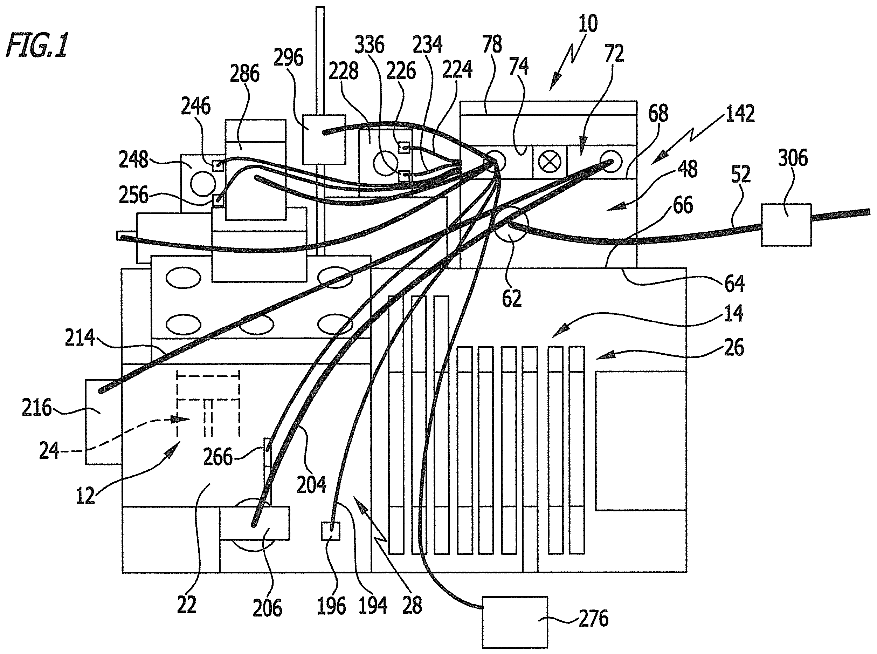

Ein Ausführungsbeispiel eines als Ganzes mit 10 bezeichneten erfindungsgemäßen Kältemittelverdichters, dargestellt in Fig. 1, umfasst eine Verdichtereinheit 12 und eine Antriebseinheit 14 zum Antrieb der Verdichtereinheit 12.

Die Verdichtereinheit 12 ist dabei in einem Verdichtergehäuse 22 angeordnet und umfasst mindestens ein Verdichterelement 24 für das Kältemittel, z.B. ausgebildet als Kolben-Zylinderelement. Außerdem ist die Antriebseinheit 14 in einem Antriebsgehäuse 26 angeordnet, wobei vorzugsweise das Verdichtergehäuse 22 und das Antriebsgehäuse 26 Teilabschnitte eines Gesamtgehäuses 28 der Verdichtereinheit 10 bilden.

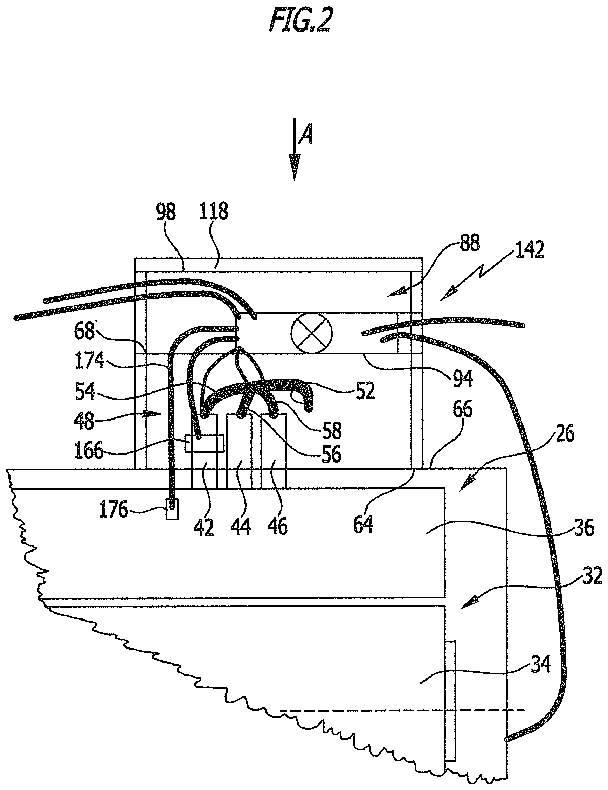

Die Antriebseinheit 14 umfasst, wie in Fig. 2 schematisch dargestellt, insbesondere einen als Ganzes mit 32 bezeichneten Elektromotor, welcher einen Rotor 34 sowie einen den Rotor 34 umgebenden Stator 36 aufweist, wobei der Stator 36 stationär in dem Antriebsgehäuse 26 angeordnet ist.

Wie in Fig. 2 dargestellt, ist der Stator 34 mit einem Satz von Anschlussklemmen 42, 44, 46 versehen, die aus dem Antriebsgehäuse 26 herausgeführt sind und in eine auf das Antriebsgehäuse 26 aufgesetzte Anschlussgehäuseeinheit 48 hineinragen.

Innerhalb der Anschlussgehäuseeinheit 48 erfolgt eine Verbindung zwischen einer als Ganzes mit 52 bezeichneten Motorzuleitung, die beispielsweise drei Phasen 54, 56, 58 aufweist, wobei jede der Phasen 54, 56, 58 mit einer der Anschlussklemmen 42, 44, 46 innerhalb der Anschlussgehäuseeinheit 48 verbunden ist und die Motorzuleitung 52 mittels einer Kabeldurchführung 62 aus der Anschlussgehäuseeinheit 48 herausgeführt ist.

Wie in Fig. 1, 2 und 3 dargestellt, sitzt die Anschlussgehäuseeinheit 48 mit einer Montageseite 64 unmittelbar auf einer von dem Antriebsgehäuse 26 gebildeten Montagefläche 66 und ist mit dem Antriebsgehäuse 26 verbunden.

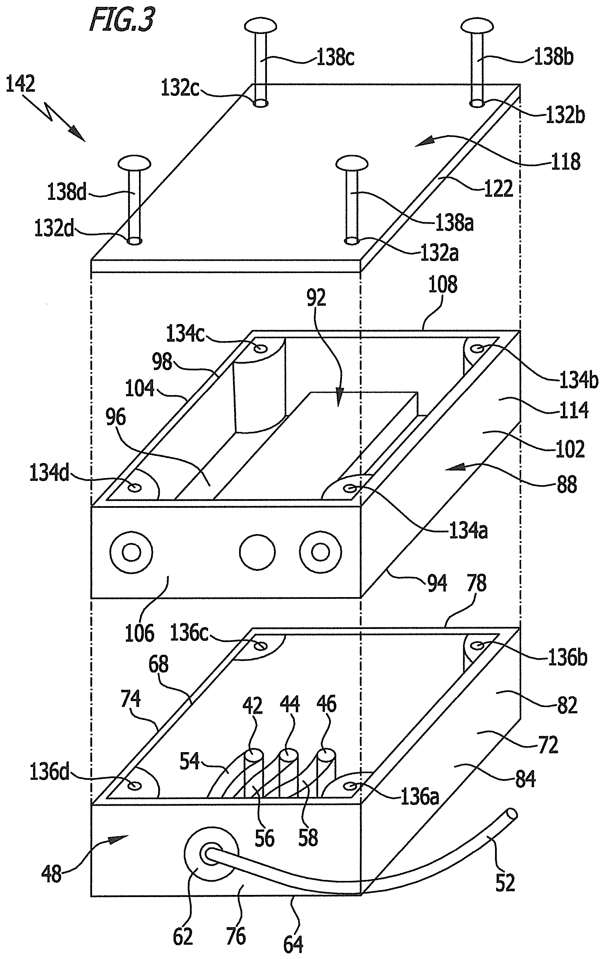

Die Anschlussgehäuseeinheit 48 weist ferner eine der Montageseite 64 gegenüberliegende Zugangsseite 68 auf, über welche die Verbindungen zwischen den Anschlussklemmen 42, 44, 46 und den Phasen 54, 56, 58 zugänglich sind, wie in Fig. 2 und 3 dargestellt.

Insbesondere umfasst die Anschlussgehäuseeinheit 48 beispielsweise vier, sich über der Montageseite 64 erhebende Gehäuseaußenwände 72, 74, 76 und 78, wobei die Gehäuseaußenwände 72 und 74 sowie die Gehäuseaußenwände 76 und 78 jeweils parallel zueinander verlaufen, so dass diese einen als Ganzes mit 82 bezeichneten Gehäuserahmen mit vorzugsweise rechteckiger Außenkontur 84 bilden, der sich zwischen der Montageseite 64 und der Zugangsseite 68 erhebt und insbesondere von der Zugangsseite 68 her zugänglich ist.

Vorzugsweise verlaufen die Montageseite 64 und die Zugangsseite 68 in parallel zueinander verlaufenden Ebenen, so dass der Gehäuserahmen 82 sich mit allseitig gleicher Erstreckung über der Montageseite 64 bis zur Zugangsseite 68 erhebt.

Auf die Anschlussgehäuseeinheit 48 ist eine als Ganzes mit 88 bezeichnete Steuerungsgehäuseeinheit aufsetzbar.

Die Steuerungsgehäuseeinheit 88 umfasst eine elektronische Funktionseinheit 92 zur Ausführung von einer oder mehreren unterschiedlichen Verdichterfunktionen, wie zum Beispiel Schutz-, Überwachungs-, Steuerungs-, Diagnose-, Kommunikations- und Regelungsfunktionen, die im Nachfolgenden exemplarisch noch im Detail beschrieben werden.

Die Steuerungsgehäuseeinheit 88 weist ihrerseits eine Montageseite 94 auf, und erstreckt sich bis zu einer Zugangsseite 98 , wobei zwischen der Montageseite 94 und der Zugangsseite 98 ein Trägerboden 96 angeordnet ist, welcher vorzugsweise nahe der Montageseite 94 liegt und welcher die elektronische Funktionseinheit 92 trägt.

Auch die Steuerungsgehäuseeinheit 88 umfasst Gehäuseaußenwände 102, 104, 106 und 108, wobei vorzugsweise die Gehäuseaußenwände 102 und 104 sowie die Gehäuseaußenwände 106 und 108 parallel zueinander verlaufen und somit einen rechteckigen Gehäuserahmen 112 bilden.

Vorzugsweise ist der Gehäuserahmen 112 der Steuerungsgehäuseeinheit 88 so ausgebildet, dass dessen Außenkontur 114, die beispielsweise rechteckig ist, mit der Außenkontur 84 des Gehäuserahmens 82 identisch ist, so dass der Gehäuserahmen 112 deckungsgleich auf den Gehäuserahmen 82 mit der Montageseite 94 aufsetzbar ist, wobei die Montageseite 94 die Zugangsseite 68 der Anschlussgehäuseeinheit 48 vollständig abdeckt.

Vorzugsweise sind die Zugangsseite 68 der Anschlussgehäuseeinheit 48 sowie die Montageseite 94 der Steuerungsgehäuseeinheit 88 noch mit Formschlusselementen versehen, so dass der Gehäuserahmen 112 der Steuerungsgehäuseeinheit 88 formschlüssig auf dem Gehäuserahmen 82 der Anschlussgehäuseeinheit 48 in der aufgesetzten Stellung gegen Bewegungen in der durch die Zugangsseite 68 definierten Ebene fixierbar ist.

Auch bei der Steuerungsgehäuseeinheit 88 liegen die Montageseite 94 und die Zugangsseite 98 vorzugsweise in zueinander parallelen Ebenen, so dass der Gehäuserahmen 112 sich allseits von der Montageseite 94 bis zur Zugangsseite 98 über dieselbe Strecke erhebt.

Ferner ist die Steuerungsgehäuseeinheit 88 auf ihrer Zugangsseite 98 noch mit einem Deckel 118 verschließbar, welcher sich über die gesamte Zugangsseite 98 der Steuerungsgehäuseeinheit 88 erstreckt und vorzugsweise eine Außenkontur 122 aufweist, welche der Außenkontur 114 der Steuerungsgehäuseeinheit 88 entspricht.

Bei der erfindungsgemäßen Lösung ist die Steuerungsgehäuseeinheit 88 im auf die Anschlusseinheit 48 aufgesetzten Zustand lösbar mit dieser fixierbar und außerdem ist der Deckel 118 lösbar zumindest an der Steuerungsgehäuseeinheit 88 fixierbar.

Dies ist beispielsweise dadurch realisiert, dass der Deckel 118 Schraubenöffnungen 132a, 132b, 132c und 132d aufweist, die koaxial zu Schraubenkanälen 134a, 134b, 134c und 134d in der Steuerungsgehäuseeinheit 88 angeordnet sind und diese Schraubenkanäle 134 sind wiederum koaxial zu Gewindebohrungen 136a, 136b, 136c und 136d angeordnet.

Damit lassen sich durch die Schraubenöffnungen 132 und die Schraubenkanäle 134 Schrauben 138a, 138b, 138c und 138d hindurchführen und in die Gewindebohrungen 136 einschrauben, so dass durch die Schrauben 138 der Deckel 118 auf der Steuerungsgehäuseeinheit 88 fixierbar ist und gleichzeitig wiederum die Steuerungsgehäuseeinheit 88 mitsamt dem Deckel 118 auf der Anschlussgehäuseeinheit 48 fixierbar ist.

Die Anschlussgehäuseeinheit 48, die Steuerungsgehäuseeinheit 88 und der Deckel 118 bilden bei dem erfindungsgemäßen Kältemittelverdichter 10 eine modular aufgebaute Gehäuseeinheit 142, wobei die Anschlussgehäuseeinheit 48 und die Steuerungsgehäuseeinheit 88 sowie der Deckel 118 jeweils ein Modul dieser Gehäuseeinheit 142 darstellen.

Somit besteht beispielsweise die Möglichkeit, einen Kältemittelverdichter 10, der lediglich mit einer Anschlussgehäuseeinheit 48 ausgestattet ist, die durch den Deckel 118 auf ihrer Zugangsseite 68 abgedeckt ist, zusätzlich mit einer elektronischen Funktionseinheit 92, die in der Steuerungsgehäuseeinheit 88 angeordnet ist, durch Abnehmen des Deckels 118 nachzurüsten, und diese Steuerungsgehäuseeinheit 88 wiederum auf ihrer Zugangsseite 98 durch den von der Anschlussgehäuseeinheit 48 abgenommenen Deckel 118 zu verschließen.

Zur Erläuterung der verschiedenen möglichen Verdichterfunktionen, die durch die elektronische Funktionseinheit 92 erfasst und/oder überwacht und/oder gesteuert werden können, sind exemplarisch in den Fig. 1, 2 und 4 verschiedene Möglichkeiten dargestellt, wobei die exemplarische Darstellung der verschiedenen Verdichterfunktionen lediglich beispielhaft erfolgt, so dass nicht zwingend alle derartigen Verdichterfunktionen bei der Realisierung der erfindungsgemäßen Steuereinheit ausgeführt werden müssen und auch die dargestellten Verdichterfunktionen durch weitere Verdichterfunktionen ergänzt werden können.

Die elektronische Funktionseinheit 92 führt beispielsweise als Verdichterfunktion eine Parametererfassungsfunktion aus, bei welcher mindestens ein Funktionsparameter, vorzugsweise mehrere Funktionsparameter erfasst werden.

So ist beispielsweise die elektronische Funktionseinheit 92 an einer Anschlussseite 152 mit Eingängen 154, 156 und 158 zur Erfassung der Spannungen an den Anschlussklemmen 42, 44, 46 versehen, so dass von den Eingängen 154, 156 und 158 entsprechende Leitungen zu den Anschlussklemmen 42, 44, 46 geführt sind, um die Spannungen UM an diesen Anschlussklemmen 42, 44, 46 als Funktionsparameter zu erfassen.

Ferner ist die Anschlussseite 152 noch mit einem Eingang 162 für ein Stromsignal versehen, von welchem eine Leitung 164 zu einem Stromsensor 166 führt, der beispielsweise eine der Anschlussklemmen 42, 44, 46 umschließt und ein von dem durch die umschlossene Anschlussklemme 42 fließenden Strom IM erzeugtes Magnetfeld erfasst und entsprechend dem Magnetfeld ein Signal für den Strom durch diese Anschlussklemme 42 dem Eingang 162 der elektronischen Funktionseinheit 92 übermittelt.

Ferner ist die elektronische Funktionseinheit 92 beispielsweise an der Anschlussseite 152 noch mit einem Eingang 172 für eine Information zur Motortemperatur TM versehen, so dass von dem Eingang 172 eine Leitung 174 zu einem Temperatursensor 176 führt, der beispielsweise dem Stator 36 zugeordnet ist, um eine Temperatur des Stators 36 zu erfassen und einen Wert für die Temperatur dem Eingang 172 der elektronischen Funktionseinheit 92 oder nur ein Signal für eine zulässige oder unzulässige, insbesondere zu hohe, Motortemperatur zu übermitteln.

Alle zu den Eingängen 154, 156, 158 sowie zu den Eingängen 162 und 172 führenden Leitungen sind durch einen Durchbruch 182 in dem Trägerboden 96 direkt von der Steuerungsgehäuseeinheit 88 in die Anschlussgehäuseeinheit 48 geführt und dort entweder mit den Anschlussklemmen 42, 44, 46 verbunden oder im Falle des Temperatursensors 176 durch die Anschlussgehäuseeinheit 48 direkt zu einem Stromdurchführungselement oder zum Stator 36 geführt.

Ferner besteht die Möglichkeit, eine Leitung für eine eventuell notwendige Heizung zur Kondensationsvermeidung durch den Durchbruch 182 hindurchzuführen.

Aufgrund der an den Eingängen 154, 156 und 158 sowie 162 und 172 vorliegenden Signale ist somit die elektronische Funktionseinheit 92 in der Lage, die Funktion des Elektromotors 32 zu erfassen und zu überwachen und gegebenenfalls auf Überlastzustände zu reagieren.

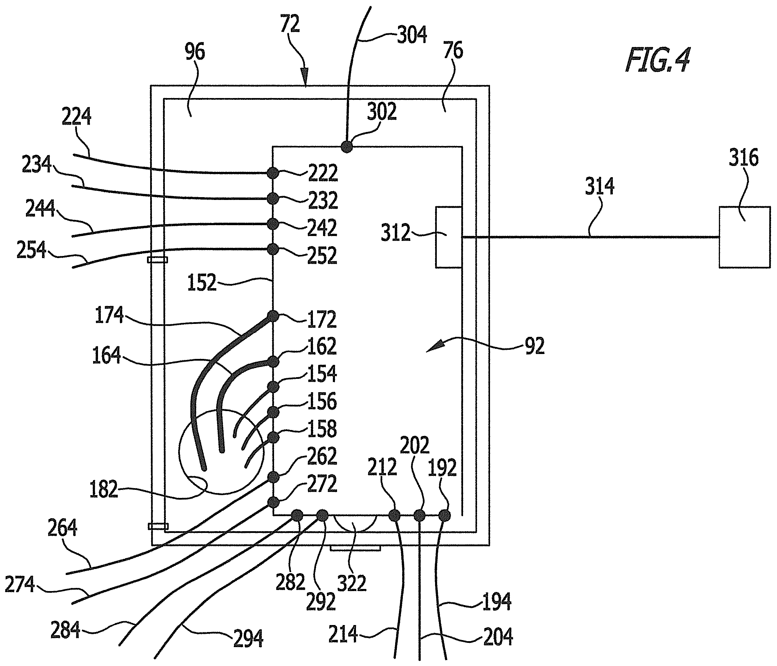

Darüber hinaus ist, wie in Fig. 4 dargestellt, die elektronische Funktionseinheit 92 noch mit einem Eingang 192 für eine Schmiermitteltemperatur TS als Funktionsparameter versehen, von welchem eine Leitung 194 zu einem Temperatursensor 196 führt, der eine Temperatur eines Schmiermittels, insbesondere eines Schmiermittelbades, im Verdichtergehäuse 22 erfasst.

Ferner ist die elektronische Funktionseinheit 92 mit einem Eingang 202 versehen, von welchem eine Leitung 204 zu einem Sensor 206 für das Schmiermittelniveau NS als Funktionsparameter führt, um zu erfassen, ob ausreichend Schmiermittel in einer Schmiermittelzufuhr und/oder in dem Schmiermittelbad vorhanden ist.

Außerdem ist die elektronische Funktionseinheit 92 noch mit einem Eingang 212 versehen, von welchem eine Leitung 214 zu einem Druckdifferenzsensor 216 führt, um einen Schmiermitteldruck PS als Funktionsparameter zu erfassen, vorzugsweise durch Messung einer Druckdifferenz beispielsweise an einer Schmiermittelpumpeinheit.

Ferner ist die elektronische Funktionseinheit 92 noch mit einem Eingang 202 für einen Wert eines Eintrittsdrucks PE des Kältemittels versehen, von welchem eine Leitung 224 zu einem Drucksensor 226 führt, der einem Sauganschluss 228 des Kältemittelverdichters 10 zugeordnet ist und somit den Druck im Sauganschluss 228 erfasst.

Ferner ist die elektronische Funktionseinheit 92 noch mit einem Eingang 232 zur Erfassung einer Eintrittstemperatur TE des Kältemittels versehen, wobei von dem Eingang 232 eine Leitung 234 zu einem Temperatursensor 236 führt, welcher ebenfalls dem Sauganschluss 228 des Kältemittelverdichters zugeordnet ist.

Die elektronische Funktionseinheit 92 ist ferner noch mit einem Eingang 242 zur Erfassung eines Austrittsdrucks PA des Kältemittels versehen, wobei von diesem Eingang 242 eine Leitung 244 zu einem Drucksensor 246 führt, welcher beispielsweise einem Druckanschluss 248 des Kältemittelverdichters 10 zugeordnet ist.

Alternativ oder ergänzend zu dem Drucksensor 246 für den Austrittsdruck PA ist es auch möglich, einen Hochdruckschalter vorzusehen, der bei Überschreiten eines vorgegebenen Drucks die elektronische Funktionseinheit 92 veranlasst, den Kältemittelverdichter 10 zum Schutz abzuschalten.

Außerdem ist die elektronische Funktionseinheit 92 mit einem Eingang 252 für eine Austrittstemperatur TA des Kältemittels am Druckanschluss 248 versehen, wobei von diesem Eingang 252 eine Leitung 254 zu einem dem Druckanschluss 248 zugeordneten Temperatursensor 256 führt, welcher die Temperatur des Kältemittels beispielsweise am Druckanschluss 248 erfasst.

Durch die an den Eingängen 222, 232, 242 und 252 anliegenden Signale ist die elektronische Funktionseinheit 92 somit in der Lage, als Funktionsparameter Druck und Temperatur des Kältemittels zu erfassen, und zwar beim Eintritt desselben in die Verdichtereinheit, beispielsweise über den Sauganschluss 228 und beim Austritt desselben aus dem Kältemittelverdichter beispielsweise über den Druckanschluss 248.

Damit besteht die Möglichkeit, im Rahmen der Ausführung einer Schutzfunktion die jeweiligen Funktionsparameter mit Referenzwerten zu vergleichen und somit bei Überschreiten oder Unterschreiten der Referenzwerte durch Steuerungsmaßnahmen einzugreifen oder gegebenenfalls im Extremfall den Kältemittelverdichter abzuschalten.

Die elektronische Funktionseinheit 92 ist aber auch zur Ausführung von Steuerungsfunktionen als Verdichterfunktionen mit mehreren Ausgängen versehen.

So ist beispielsweise ein Ausgang 262 vorgesehen, von welchem eine Leitung 264 zu einer Schmiermittelheizung 266 führt, die in dem Verdichtergehäuse 22 angeordnet ist, um mittels einer der Steuerungsfunktionen durch geeignetes Ansteuern der Schmiermittelheizung 266 das in diesem vorgesehene Schmiermittel aufzuheizen.

Ein weiterer Ausgang 272 dient dazu, um mittels einer der Steuerungsfunktionen über eine Leitung 274 einen Zusatzlüfter 276 zu steuern, welcher dazu dient, einen Kältemittelkreislauf an einer oder mehreren Stellen und/oder den Kältemittelverdichter zusätzlich zu kühlen.

Ein Ausgang 282 dient dazu, um mittels einer der Steuerungsfunktionen über eine Leitung 284 mindestens ein Steuerelement für die Verdichterleistung, beispielsweise ein Leistungsregelungsventil 286, anzusteuern, um die Verdichterleistung zu steuern.

Weiter dient ein Ausgang 292 dazu, um mittels einer der Steuerungsfunktionen über eine Leitung 294 ein Einspritzelement 296 anzusteuern, welches dazu dient, unter Hochdruck stehendes Kältemittel in den Kältemittelverdichter einzuspritzen, um entweder dadurch einen zusätzlichen Kühleffekt im Bereich des Verdichterelements oder im Bereich des Elektromotors 32 zur Kühlung derselben zu erreichen.

Vorzugsweise sind der elektronischen Funktionseinheit 92 zur Ausführung einer Betriebsüberwachungsfunktion zusätzlich auch noch Einsatzgrenzen des spezifischen Kältemittelverdichters 10 und Parameter des Kältemittels vorgegeben, so dass dieser unter Berücksichtigung der an den Eingängen 154, 156, 158, 162, 172, 182, 192, 202, 212, 222, 232, 242 und 252 erfassten Funktionsparameter, ob der Kältemittelverdichter in einem zulässigen Betriebszustand arbeitet oder außerhalb eines derartigen zulässigen Betriebszustandes und durch die über die Ausgänge 262, 272, 282, und 292 gesteuerten Einheiten gegebenenfalls ein Einhalten der Einsatzgrenzen zu erwirken.

Ferner ist die elektronische Funktionseinheit mit einem Ausgang 302 versehen, über welchen als eine der Steuerungsfunktionen mittels einer Leitung 304 mit einer Motorsteuerung 306 ansteuerbar ist, welche dazu dient, den Elektromotor 32 entsprechend seinem Aufbau in geeigneter Weise bei dem Anlauf und/oder in den jeweiligen Betriebszuständen zu steuern.

Die Motorsteuerung 306 kann auch gleichzeitig zum Abschalten des Elektromotors 32 bei Überschreiten oder Unterschreiten mindestens eines Referenzparameters bei Ausführung einer Schutzfunktion eingesetzt werden.

Darüber hinaus ist die elektronische Funktionseinheit 92 noch mit einer Kommunikationseinheit 312 versehen, welche dazu vorgesehen ist, mit den externen Geräten 316, beispielsweise übergeordneten Anlagesteuerungen, zu kommunizieren.

Die Kommunikation mit einer Anlagesteuerung 316 kann dabei entweder leitungsgebunden über eine Leitung 314, beispielsweise einen Modbus, erfolgen oder drahtlos, über übliche Kommunikationsprotokolle, wie beispielsweise Bluetooth oder W-LAN.

Darüber hinaus ist die Elektronische Funktionseinheit 92 noch mit einem Anzeigeelement 322 versehen, welches in der Lage ist, mindestens einen Zustand oder das Resultat einer Verdichterfunktion anzuzeigen.

Ein derartiger Zustand einer Verdichterfunktion kann beispielsweise eine Anzeige von Funktionsparametern und/oder von erlaubten Betriebszuständen und/oder eine Anzeige einer ausgelösten Schutzfunktion und/oder eine Anzeige einer Steuerungsfunktion und/oder eine Anzeige einer Störung, insbesondere in Kombination mit der Art der Störung, und/oder eine Kombination derselben sein.

Die Anzeige kann über ein am Gehäuse vorgesehenes Anzeigeelement 322 oder aber auch über einen leitungsgebundenen oder drahtlosen Kommunikationsweg auf eine stationäre oder tragbare Anzeigeeinheit, wie zum Beispiel einen Rechner oder ein tragbares Kommunikationsgerät erfolgen.

## Patentansprüche

1. Kältemittelverdichter (10) umfassend eine Verdichtereinheit (12) mit einem Verdichtergehäuse (22) und mindestens einem in dem Verdichtergehäuse angeordneten Verdichterelement (24) zum Verdichten von Kältemittel, eine Antriebseinheit (14) mit einem Antriebsgehäuse (26) und einem in dem Antriebsgehäuse (26) angeordneten Elektromotor (32) und mit an dem Antriebsgehäuse (26) angeordneten Anschlussklemmen (42, 44, 46) für den Elektromotor (32), und ferner umfassend eine elektronische Funktionseinheit (92), wobei eine Verdichterfunktion der elektronischen Funktionseinheit eine Parametererfassungsfunktion ist, wobei zur Ausführung der Parametererfassungsfunktion
die Temperatur (TM) des Elektromotors (32) als Funktionsparameter und mindestens einer der Funktionsparameter wie Schmiermitteltemperatur (TS),
Schmiermitteldifferenzdruck (PS), vorzugsweise durch Messung einer Druckdifferenz, beispielsweise an einer Schmiermittelpumpeinheit, Schmiermittelniveau (NS),
erfasst werden, wobei eine weitere Verdichterfunktion eine Schutzfunktion ist, wobei zur Ausführung der Schutzfunktion die Parametererfassungsfunktion ausgeführt wird und die erfassten Funktionsparameter mit mindestens einem Referenzparameter verglichen werden, wobei bei Über- oder Unterschreiten des mindestens einen Referenzparameters eine Abschaltung des Kältemittelverdichters erfolgt, wobei eine weitere Verdichterfunktion eine Steuerungsfunktion ist, wobei eine weitere Verdichterfunktion eine Betriebszustandsüberwachungsfunktion ist, wobei zur Ausführung der Betriebszustandsüberwachungsfunktion eine Aufzeichnung der Ausführung der mindestens einen Parametererfassungsfunktion und der mindestens einen Schutzfunktion und der mindestens einen Steuerungsfunktion erfolgt, wobei die Aufzeichnung der Funktionsparameter und die Ausführung mindestens einer Schutzfunktion und die Ausführung der mindestens einen Steuerungsfunktion über der Zeit erfolgt und wobei die elektronische Funktionseinheit (92) mit einer Kommunikationseinheit (312) zum Austausch von Daten mit einer externen übergeordneten Anlagensteuerung (316) kommuniziert.

2. Kältemittelverdichter nach Anspruch 1, **dadurch gekennzeichnet, dass** zur Ausführung der Steuerungsfunktion mindestens eine der Einheiten wie:
Schmiermittelheizung (266),
Zusatzlüfter (276),
Steuerelement (286) für die Verdichterleistung,
Einspritzelement für verdichtetes Kältemittel zur zusätzlichen Kühlung, Motorsteuerung (306),
angesteuert wird.

3. Kältemittelverdichter (10) nach Anspruch 1 oder 2, **dadurch**
**gekennzeichnet dass**, zur Ausführung der Parametererfassungsfunktion mindestens einer der Funktionsparameter wie:
Spannung (UM) am Elektromotor (32) und Stromaufnahme (IM) des Elektromotors (32) und/oder
Eintrittstemperatur (TE) des Kältemittels und
Austrittstemperatur (TA) des Kältemittels, erfasst werden, dass eine weitere Verdichterfunktion eine Schutzfunktion ist, dass zur Ausführung der Schutzfunktion die Parametererfassungsfunktion ausgeführt wird und der erfasste Funktionsparameter mit mindestens einem Referenzparameter verglichen wird, dass bei Über- oder Unterschreiten des mindestens einen Referenzparameters eine Abschaltung des Kältemittelverdichters erfolgt.

4. Kältemittelverdichter nach einem der voranstehenden Ansprüche, **dadurch gekennzeichnet, dass** die Motorsteuerung (306) eine Motoranlaufsteuerung umfasst und/oder den Elektromotor (32) selbst hinsichtlich seiner Drehzahl ansteuert.

5. Kältemittelverdichter nach einem der voranstehenden Ansprüche, **dadurch gekennzeichnet, dass** die Kommunikationseinheit (312) die Daten leitungsgebunden und/oder drahtlos austauscht.

6. Kältemittelverdichter nach einem der voranstehenden Ansprüche, **dadurch gekennzeichnet, dass** die elektronische Funktionseinheit (92) mit mindestens einem Anzeigeelement (322) versehen ist, welches mindestens einen Ausführungszustand einer Verdichterfunktion oder deren Resultat anzeigt.

7. Kältemittelverdichter nach einem der voranstehenden Ansprüche, **dadurch gekennzeichnet, dass** die Anschlussklemmen (42, 44, 46) in einem an dem Antriebsgehäuse (26) angeordneten Gehäuse (142) vorgesehen sind und dass in dem Gehäuse (142) eine elektronische Funktionseinheit (92) vorgesehen ist, welche mindestens eine Verdichterfunktion ausführt.

8. Kältemittelverdichter nach Anspruch 7, **dadurch gekennzeichnet, dass** in dem für die Anschlussklemmen vorzusehenden Gehäuse die elektronische Funktionseinheit (92) integriert ist und somit bereits vom Hersteller des Kältemittelverdichters mit diesem verbunden und fest installiert ist.

9. Kältemittelverdichter nach Anspruch 7 oder 8, **dadurch gekennzeichnet, dass** das Gehäuse (142) eine Anschlussgehäuseeinheit (48) aufweist, in welcher die Anschlussklemmen (42, 44, 46) angeordnet sind.

10. Kältemittelverdichter nach Anspruch 7 bis 9, **dadurch gekennzeichnet, dass** das Gehäuse (142) eine Steuerungsgehäuseeinheit (88) aufweist, in welcher die elektronische Funktionseinheit (92) angeordnet ist.

11. Kältemittelverdichter nach einem der voranstehenden Ansprüche, **dadurch gekennzeichnet, dass** die Anschlussgehäuseeinheit (48) an dem Antriebsgehäuse (26) angeordnet ist.

12. Kältemittelverdichter nach einem der voranstehenden Ansprüche, **dadurch gekennzeichnet, dass** die Steuerungsgehäuseeinheit (88) an der Anschlussgehäuseeinheit (48) angeordnet ist und dass insbesondere die Steuerungsgehäuseeinheit (88) auf einer dem Antriebsgehäuse (26) gegenüberliegenden Seite der Anschlussgehäuseeinheit (48) an dieser angeordnet ist.

13. Kältemittelverdichter nach einem der voranstehenden Ansprüche, **dadurch gekennzeichnet, dass** die Steuerungsgehäuseeinheit (88) die Anschlussgehäuseeinheit (48) abdeckt.

14. Kältemittelverdichter nach einem der Ansprüche 8 bis 12, **dadurch gekennzeichnet, dass** die Steuerungsgehäuseeinheit (88) lösbar mit der Anschlussgehäuseeinheit (48) verbunden ist.

15. Kältemittelverdichter nach einem der Ansprüche 9 bis 14, **dadurch gekennzeichnet, dass** die Steuerungsgehäuseeinheit (88) auf einer der Anschlussgehäuseeinheit (48) abgewandten Seite durch einen Deckel (118) abgedeckt ist.

## Claims

1. A refrigerant compressor (10) comprising a compressor unit (12) with a compressor housing (22) and, arranged in the compressor housing, at least one compressor element (24) for compression of refrigerant, a drive unit (14) with a drive housing (26) and an electric motor (32) arranged in the drive housing (26) and, arranged on the drive housing (26), connection terminals (42, 44, 46) for the electric motor (32), and further comprising an electronic functional unit (92), wherein a compressor function of the electronic functional unit is a parameter detection function, wherein for carrying out the parameter detection function there are detected
the temperature (TM) of the electric motor (32) as a function parameter and at least one of the function parameters such as
lubricant temperature (TS),
lubricant differential pressure (PS), preferably by measurement of a pressure difference, for example at a lubricant pump unit,
lubricant level (NS),
wherein a further compressor function is a protective function, wherein for carrying out the protective function there is carried out the parameter detection function and the detected function parameters are compared with at least one reference parameter, wherein upon overshooting or undershooting the at least one reference parameter there occurs a switching off of the refrigerant compressor, wherein a further compressor function is a control function, wherein a further compressor function is an operational status monitoring function, wherein for carrying out the operational status monitoring function there occurs a recording of the carrying out of the at least one parameter detection function and the at least one protective function and the at least one control function, wherein the recording of the function parameters and the carrying out of the at least one protective function and the carrying out of the at least one control function occurs over time and wherein the electronic functional unit (92) communicates with a communication unit (312) for the exchange of data with an external higher-level system control (316).

2. A refrigerant compressor according to claim 1, **characterised in that** for carrying out the control function there is controlled at least one of the units such as:
lubricant heating (266),
auxiliary fan (276),
control element (286) for the compressor performance,
injection element for compressed refrigerant for additional cooling,
motor control (306).

3. A refrigerant compressor (10) according to claim 1 or 2, **characterised in that** for carrying out the parameter detection function there are detected at least one of the function parameters such as:
voltage (UM) at the electric motor (32) and
current consumption (IM) of the electric motor (32) and/or
input temperature (TE) of the refrigerant and
outlet temperature (TA) of the refrigerant, **in that** a further compression function is a protective function, **in that** for carrying out the protective function the parameter detection function is carried out and the detected function parameter is compared with at least one reference parameter, **in that** upon overshooting or undershooting the at least one reference parameter there occurs a switching off of the refrigerant compressor.

4. A refrigerant compressor according to any one of the preceding claims, **characterised in that** the motor control (306) comprises a motor start-up control and/or itself controls the electric motor (32) regarding its speed.

5. A refrigerant compressor according to any one of the preceding claims, **characterised in that** the communication unit (312) exchanges the data through wires and/or wirelessly.

6. A refrigerant compressor according to any one of the preceding claims, **characterised in that** the electronic functional unit (92) is provided with at least one display element (322), which indicates at least one execution status of a compressor function or its result.

7. A refrigerant compressor according to any one of the preceding claims, **characterised in that** the connection terminals (42, 44, 46) are provided in a housing (142) arranged on the drive housing (26) and **in that** there is provided in the housing (142) an electronic functional unit (92), which carries out at least one compressor function.

8. A refrigerant compressor according to claim 7, **characterised in that** the electronic functional unit (92) is integrated in the housing provided for the connection terminals and is thus previously connected therewith and fixedly installed by the manufacturer of the refrigerant compressor.

9. A refrigerant compressor according to claim 7 or 8, **characterised in that** the housing (142) has a connection housing unit (48) in which the connection terminals (42, 44, 46) are arranged.

10. A refrigerant compressor according to any of claims 7 to 9, **characterised in that** the housing (142) has a control housing unit (88) in which the electronic functional unit (92) is arranged.

11. A refrigerant compressor according to any one of the preceding claims, **characterised in that** the connection housing unit (48) is arranged on the drive housing (26).

12. A refrigerant compressor according to any one of the preceding claims, **characterised in that** the control housing unit (88) is arranged on the connection housing unit (48) and **in that** in particular the control housing unit (88) is arranged on the connection housing unit (48) on a side opposite to the drive housing (26).

13. A refrigerant compressor according to any one of the preceding claims, **characterised in that** the control housing unit (88) covers the connection housing unit (48).

14. A refrigerant compressor according to any one of claims 8 to 12, **characterised in that** the control housing unit (88) is releasably connected to the connection housing unit (48).

15. A refrigerant compressor according to any one of claims 9 to 14, **characterised in that** the control housing unit (88) is covered by a cover (118) on a side facing away from the connection housing unit (48).

## Revendications

1. Compresseur de réfrigérant (10) comprenant une unité de compression (12) avec un carter de compresseur (22) et au moins un élément de compression (24) disposé dans le carter de compresseur pour comprimer du réfrigérant, une unité d'entraînement (14) avec un carter d'entraînement (26) et un moteur électrique (32) disposé dans le carter d'entraînement (26) et avec des bornes de raccordement (42, 44, 46) pour le moteur électrique (32) disposées sur le carter d'entraînement (26), et comprenant en outre une unité fonctionnelle électronique (92), dans lequel une fonction de compression de l'unité fonctionnelle électronique est
une fonction de détection de paramètres, dans lequel, pour exécuter la fonction de détection de paramètres, sont détectés
la température (TM) du moteur électrique (32) en tant que paramètre de fonction et au moins un des paramètres de fonction comme
la température de lubrifiant (TS),
la pression différentielle de lubrifiant (PS), de préférence par la mesure d'une pression différentielle, par exemple sur une unité de pompage de lubrifiant, le niveau de lubrifiant (NS),
dans lequel une autre fonction de compression est
est une fonction de protection, dans lequel la fonction de détection de paramètres est exécutée pour exécuter la fonction de protection et les paramètres de fonction détectés sont comparés à au moins un paramètre de référence, dans lequel une coupure du compresseur de réfrigérant est effectuée en cas de dépassement ou de non-dépassement de l'au moins un paramètre de référence, dans lequel une autre fonction de compression est une fonction de commande, dans lequel une autre fonction de compression est une fonction de surveillance d'état de fonctionnement, dans lequel, pour exécuter la fonction de surveillance d'état de fonctionnement, un enregistrement de l'exécution de l'au moins une fonction de détection de paramètres et de l'au moins une fonction de protection et de l'au moins une fonction de commande est effectué, dans lequel l'enregistrement des paramètres de fonction et l'exécution d'au moins une fonction de protection et l'exécution de l'au moins une fonction de commande s'effectuent au fil du temps et dans lequel l'unité fonctionnelle électronique (92) communique avec une unité de communication (312) pour échanger des données avec une commande d'installation (316) externe de niveau supérieur.

2. Compresseur de réfrigérant selon la revendication 1, **caractérisé en ce que** pour exécuter la fonction de commande, au moins une des unités comme :
le chauffage de lubrifiant (266),
le ventilateur additionnel (276),
l'élément de commande (286) pour la puissance de compression,
l'élément d'injection pour du réfrigérant comprimé pour le refroidissement supplémentaire,
la commande de moteur (306),
est pilotée.

3. Compresseur de réfrigérant (10) selon la revendication 1 ou 2, **caractérisé en ce que**, pour exécuter la fonction de détection de paramètres, au moins un paramètre des paramètres de fonction comme :
la tension (UM) sur le moteur électrique (32) et
la consommation de courant (IM) du moteur électrique (32) et/ou
la température d'entrée (TE) du réfrigérant et
la température de sortie (TA) du réfrigérant, sont détectés, qu'une autre fonction de compression est une fonction de protection, que la fonction de détection de paramètres est exécutée pour exécuter la fonction de protection et que le paramètre de fonction détecté est comparé à au moins un paramètre de référence, qu'une coupure du compresseur de réfrigérant est effectuée en cas de dépassement ou de non-dépassement de l'au moins un paramètre de référence.

4. Compresseur de réfrigérant selon l'une quelconque des revendications précédentes, **caractérisé en ce que** la commande de moteur (306) comprend une commande de démarrage de moteur et/ou pilote elle-même le moteur électrique (32) en ce qui concerne sa vitesse de rotation.

5. Compresseur de réfrigérant selon l'une quelconque des revendications précédentes, **caractérisé en ce que** l'unité de communication (312) échange les données par liaison filaire et/ou sans fil.

6. Compresseur de réfrigérant selon l'une quelconque des revendications précédentes, **caractérisé en ce que** l'unité fonctionnelle électronique (92) est pourvue d'au moins un élément d'affichage (322), qui indique au moins un état d'exécution d'une fonction de compression ou son résultat.

7. Compresseur de réfrigérant selon l'une quelconque des revendications précédentes, **caractérisé en ce que** les bornes de raccordement (42, 44, 46) sont prévues dans un carter (142) disposé sur le carter d'entraînement (26) et qu'est prévue dans le carter (142) une unité fonctionnelle électronique (92), laquelle exécute au moins une fonction de compression.

8. Compresseur de réfrigérant selon la revendication 7, **caractérisé en ce que** l'unité fonctionnelle électronique (92) est intégrée dans le carter à prévoir pour les bornes de raccordement et est ainsi déjà reliée au compresseur de réfrigérant et est installée de manière fixe par le fabricant de ce dernier.

9. Compresseur de réfrigérant selon la revendication 7 ou 8, **caractérisé en ce que** le carter (142) présente une unité de carter de raccordement (48) dans laquelle les bornes de raccordement (42, 44, 46) sont disposées.

10. Compresseur de réfrigérant selon la revendication 7 à 9, **caractérisé en ce que** le carter (142) présente une unité de carter de commande (88) dans laquelle l'unité fonctionnelle électronique (92) est disposée.

11. Compresseur de réfrigérant selon l'une quelconque des revendications précédentes, **caractérisé en ce que** l'unité de boîtier de raccordement (48) est disposée sur le carter d'entraînement (26).

12. Compresseur de réfrigérant selon l'une quelconque des revendications précédentes, **caractérisé en ce que** l'unité de carter de commande (88) est disposée sur l'unité de boîtier de raccordement (48) et qu'en particulier l'unité de carter de commande (88) est disposée sur l'unité de carter de raccordement (48) sur un côté de celle-ci faisant face au boîtier d'entraînement (26).

13. Compresseur de réfrigérant selon l'une quelconque des revendications précédentes, **caractérisé en ce que** l'unité de carter de commande (88) recouvre l'unité de carter de raccordement (48).

14. Compresseur de réfrigérant selon l'une quelconque des revendications 8 à 12, **caractérisé en ce que** l'unité de carter de commande (88) est reliée de manière amovible à l'unité de carter de raccordement (48).

15. Compresseur de réfrigérant selon l'une quelconque des revendications 9 à 14, **caractérisé en ce que** l'unité de boîtier de commande (88) est recouverte par un couvercle (118) sur un côté opposé à l'unité de carter de raccordement (48).
